# EUROPEAN PATENT APPLICATION

(11) **EP 1 179 826 A1**
(43) Date of publication of application: **13.02.2002**
(21) Application number: 00650080.5
(22) Date of filing: 12.07.2000
(51) Int. Cl.: H01G 4/12, H01G 4/40

(54) **An integrated passive device and a method for producing such a device**

(71) Applicant: LITTELFUSE IRELAND DEVELOPMENT COMPANY LIMITED, Dundalk, County Louth (IE)
(72) Inventor: Raghavendra, Ramesh, Dundalk, County Louth (IE); Randall, Clive A., The Penn State Res. Foundation, University Park, Pennsylvania 16802 (US); Baker, Amanda L., The Penn State Res. Foundation, University Park, Pennsylvania 16802 (US)
(74) Representative: Weldon, Michael James

(57) **Abstract**

An IPD (1) has a varistor (2) of electrodes (11) and a ZₙO dielectric 10. A capacitor (3) comprises electrodes 13 and a dielectric 12 comprising oxides of bismuth, magnesium, and niobium having a pyrochlore structure of type A₂B₂O₇. The materials are applied as wet layers and are sintered for integrated production.

## Description

The invention relates to integrated passive devices, comprising two or more passive components.

The continuing drive for component count reduction and miniaturisation has led in recent years to integration of inductors or capacitors with resistors into single surface mount devices. However, various technical problems have prevented successful integration of a component with a varistor, and there has been particular difficulty with integration of a capacitor with a varistor. The approaches to date have involved use of barrier materials between the components, adding expense and preventing miniaturisation to the extent desired.

The invention is directed towards addressing this problem.

According to the invention there is provided a capacitor comprising electrodes and a dielectric comprising a pyrochlore formulation of oxides of bismuth, magnesium, and niobium.

In one embodiment, the electrodes are of platinum material.

According to another aspect there is provided an integrated passive device comprising a varistor of ZnO material and a capacitor having an electrode and a dielectric of bismuth, magnesium, and niobate material.

According to another aspect there is provided a process for producing an integrated passive device comprising the steps of:
applying wet layers of a capacitor material and a varistor material having similar sintering shrinkage and thermal expansion characteristics, and
sintering the layers to provide the integrated passive device.

In one embodiment, the capacitor dielectric comprises oxides of bismuth, magnesium, and niobium having a pyrochlore unit structure of type A₂B₂O₇ and the varistor material comprises ZnO possessing a wurtzite structure.

In one embodiment, the capacitor materials are prepared by:-
milling oxide powders of bismuth, magnesium, and niobium,
calcinating the milled powders, and
milling the calcinated powders with organic binders.

In one embodiment, calcination is at a temperature of approximately 800°C for approximately 6 hours.

In one embodiment, the varistor materials are prepared by blending oxides of bismuth, antimony, cobalt and nickel with ZnO, calcinating the mixed ZnO formulation at a temperature of 920°C, milling the calcined powders with organic binders, followed by shear mixing and ageing.

In one embodiment, the materials are applied in layers with a viscosity in the range 15 PaS to 20 PaS.

In one embodiment, the layers are applied by screen printing.

In one embodiment, the sintering temperature is in the range of 1060°C to 1100°C and the duration is in a range of 2 to 4h.

The invention will be more clearly understood from the following description of some embodiments thereof given by way of example only with reference to the accompanying drawings in which:-
Fig. 1(a) is a perspective view of an integrated passive device of the invention together with an equivalent circuit of the device, and Fig. 1(b) is a diagrammatic cut-away view showing the internal structure;
Fig. 2 is a photograph showing the layered structure of the device; and
Figs. 3 to 7 are plots illustrating characteristics of the device.

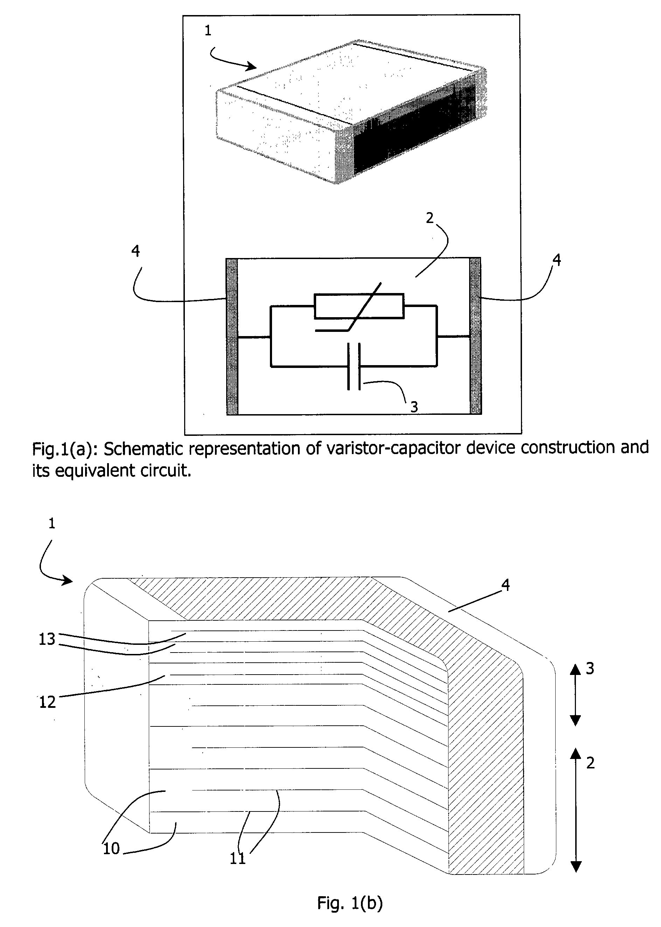

Referring to Fig. 1(a) a monolithic integrated passive device (IPD) 1 having a varistor 2 and a capacitor 3 is shown. The end terminations are indicated by the numeral 4. The varistor 2 comprises ZnO with oxides of bismuth, antimony, cobalt and nickel as prime additive materials and having a Wurtzite structure. The capacitor electrodes are of platinum material, and the dielectric is of bismuth, magnesium and niobium-based oxide materials having a pyrochlore unit structure of type A₂B₂O₇. The electrodes may alternatively be of silver palladium material.

Referring to Fig. 1(b), the varistor 2 comprises layers 10 of dielectric material between electrodes 11. The capacitor 3 comprises layers 12 of dielectric material between electrodes 13.

The IPD 1 is produced by:
(a) vibro-milling the capacitor dielectric material oxide powders,
(b) calcinating the milled powders at approx. 800°C for approx. 6 hrs,
(c) ball milling the calcinated powders using organic binders, and shear mixing and ageing to optimise the materials as screen-printing inks having a viscosity in the range 15 PaS to 25 PaS,
(d) preparing ZnO varistor materials by (i) blending the additive materials with ZnO and calcining them at 920°C, (ii) vibromilling followed by ball milling with organic binders for 24h (iii), and shear mixing and ageing at 55°C for 15h.
(e) screen printing the layers on a glass substrate containing self adhesive mylar in the order illustrated in Fig. 1(b), and
(f) sintering the layers at a temperature in the range 1060-1100°C for a duration ranging between 2-4 hours.

The layers have substantially similar thermal expansion and shrinkage characteristics for sintering. Choice of sintering temperature within this range has an effect on the electrical characteristics of the IPD 1, as demonstrated by the following table.

| Dielectric constant @1060°C | Dielectric constant @1100°C | Dielectric loss @1060°C | Dielectric loss @1100°C |
|---|---|---|---|
| 170 | 177 | 0.001 | 0.0024 |

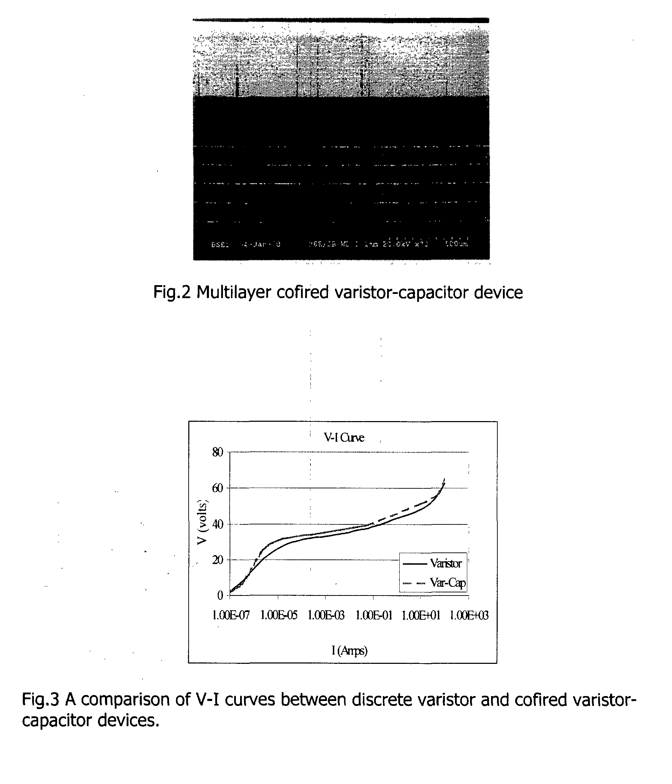

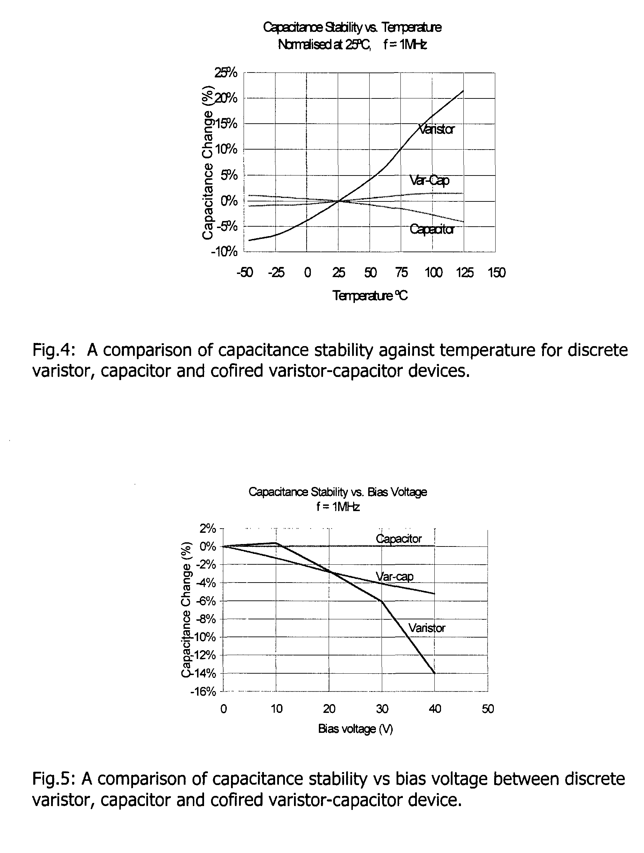

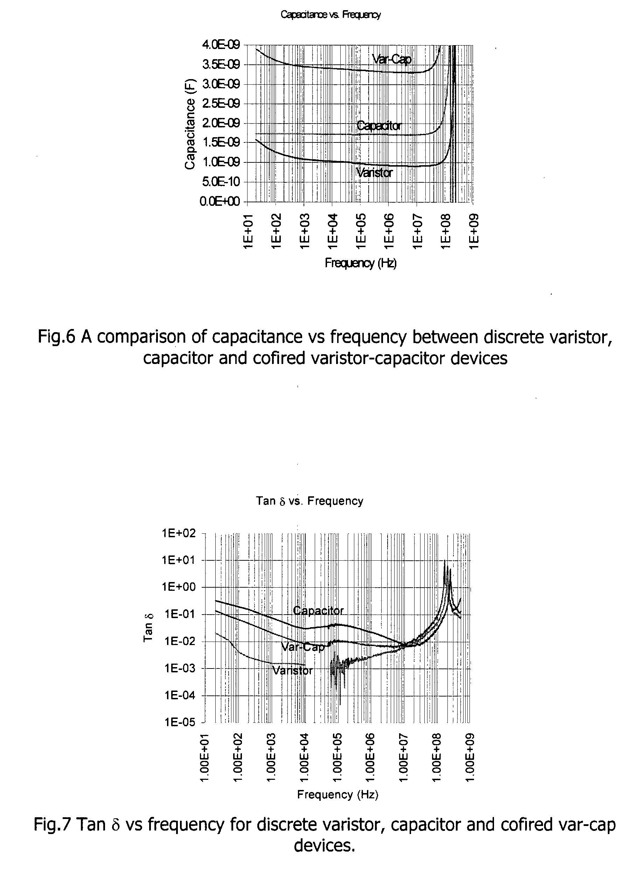

The layered structure of the IPD 1 is shown in Fig. 2, from which it is clear that it has excellent mechanical and chemical integrity. The electrical properties of the IPD 1 were analysed and the results are set out in Figs. 3 to 7. The comparisons are with a discrete varistor and a discrete capacitor as appropriate. As shown in Fig. 3 there are very similar V-I varistor curves. Fig. 4 is a plot of capacitance stability versus temperature for the IPD 1 ("Var-Cap") and a discrete varistor and capacitor, and Fig. 5 is a plot of capacitive stability vs. bias voltage for these devices.

Fig. 6 shows a comparison of capacitance vs frequency between discrete varistor, capacitor, and cofired varistor-capacitor devices.

Fig. 7 shows Tan δ vs frequency for discrete varistor, capacitor and cofired var-cap devices.

As can be seen from these plots of electrical results, cofiring of the capacitor formulation has not deteriorated varistor properties. In fact it has improved leakage characteristics and has provided added value to the varistor. The key electrical features of the cofired varistor-capacitor IPD 1 shown in Figs. 3-7 can be summarised as follows:
- Enhanced EMI suppression capabilities
- Discrete capacitor/varistor replacement
- Enhanced capacitance stability over temperature, frequency and bias voltage
- Devices have operating temperature range between -55 to 125°C.
- Low inductance package.

In addition, these cofired devices possess better clamping of fast transients such as ESD.

It will be appreciated that a low loss, medium dielectric constant, temperature, frequency and bias voltage stable capacitor material has been developed and has been successfully cofired with zinc oxide based varistor without the need for either a barrier or an interlayer material. These devices have characteristics suitable for highfrequency/low-pass filter circuit functions, thereby providing suppression and filtering in a single package. Indeed a capacitor having the structure described, without a varistor, has excellent filtering characteristics.

The invention is not limited to the embodiments described but may be varied in construction and detail.

## Claims

1. A capacitor comprising electrodes and a dielectric comprising a pyrochlore formulation of oxides of bismuth, magnesium, and niobium.

2. A capacitor as claimed in claim 1, wherein the electrodes are of platinum material.

3. An integrated passive device comprising a varistor of ZnO material and a capacitor having a dielectric of bismuth, magnesium, and niobate-based oxide materials.

4. A process for producing an integrated passive device comprising the steps of:
applying wet layers of a capacitor material and a varistor material having similar sintering shrinkage and thermal expansion characteristics, and
sintering the layers to provide the integrated passive device.

5. A process as claimed in claim 4, wherein the capacitor dielectric comprises oxides of bismuth, magnesium, and niobium having a pyrochlore unit structure of type A₂B₂O₇ and the varistor material comprises ZnO possessing a wurtzite structure.

6. A process as claimed in claims 4 or 5, wherein the capacitor materials are prepared by:-
milling oxide powders of bismuth, magnesium, and niobium,
calcinating the milled powders, and
milling the calcinated powders with organic binders.

7. A process as claimed in claim 6, wherein calcination is at a temperature of approximately 800°C for approximately 6 hours.

8. A process as claimed in any of claims 4 to 7, wherein the varistor materials are prepared by blending oxides of bismuth, antimony, cobalt, and nickel with ZnO, calcinating the mixed ZnO formulation at a temperature of 920°C, milling the calcined powders with organic binders, followed by shear mixing and ageing.

9. A process as claimed in any of claims 4 to 8, wherein the materials are applied in layers with a viscosity in the range 15 PaS to 20 PaS.

10. A process as claimed in any of claims 4 to 9, wherein the layers are applied by screen printing.

11. A process as claimed in any of claims 4 to 10, wherein the sintering temperature is in the range of 1060°C to 1100°C and the duration is in a range of 2 to 4h.
